(19) Europäisches Patentamt / European Patent Office / Office européen des brevets

(11) **EP 3 477 272 B1**

(12) **EUROPEAN PATENT SPECIFICATION**

(45) Date of publication and mention
of the grant of the patent:
**06.05.2020 Bulletin 2020/19**

(51) Int Cl.:
***G01K 7/01*** *(2006.01)*

(21) Application number: **17199173.0**

(22) Date of filing: **30.10.2017**

(54) **THERMOMETER**

THERMOMETER

THERMOMÈTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.05.2019 Bulletin 2019/18**

(73) Proprietor: **Hitachi, Ltd.
Tokyo (JP)**

(72) Inventor: **GONZALEZ ZALBA, Miguel Fernando
Cambridge, Cambridgeshire CB3 0HE (GB)**

(74) Representative: **Piotrowicz, Pawel Jan Andrzej et
al
Venner Shipley LLP
Byron House
Cambridge Business Park
Cowley Road
Cambridge CB4 0WZ (GB)**

(56) References cited:
**EP-A1- 0 813 046**

- **Gregor Fessler ET AL: "Electron Temperature in
  GaAs Quantum Dots", , 30 September 2008
  (2008-09-30), XP055472298, Retrieved from the
  Internet:
  URL:http://citeseerx.ist.psu.edu/viewdoc/d
  ownload?doi=10.1.1.559.8560&rep=rep1&type=
  pdf [retrieved on 2018-05-03]**
- **J. P. PEKOLA ET AL: "Thermometry by Arrays of
  Tunnel Junctions", PHYSICAL REVIEW
  LETTERS, vol. 73, no. 21, 1 November 1994
  (1994-11-01), pages 2903-2906, XP055472465, US
  ISSN: 0031-9007, DOI:
  10.1103/PhysRevLett.73.2903**
- **FLORIAN HAUPT ET AL: "Single Quantum Dot as
  an Optical Thermometer for Millikelvin
  Temperatures", PHYSICAL REVIEW APPLIED,
  vol. 2, no. 2, 1 August 2014 (2014-08-01),
  XP055472359, ISSN: 2331-7019, DOI:
  10.1103/PhysRevApplied.2.024001**
- **M. F. GONZALEZ-ZALBA ET AL: "Probing the
  limits of gate-based charge sensing", NATURE
  COMMUNICATIONS, vol. 6, 20 January 2015
  (2015-01-20), page 6084, XP055436067, DOI:
  10.1038/ncomms7084**

**Description**

**Field of the Invention**

The present invention relates to a thermometer.

**Background**

Temperature is an important quantity in every field of science and technology. Although a vast selection of thermometers exists, there is no simple thermometry solution for all applications. Ideally, a thermometer should be fast, compact, accurate, independent of other system variables such as magnetic field, and simple to use. It is desirable for a thermometer to be primary, that is, to relate temperature to other measurable quantities through a known physical law. This eliminates the need for initial calibration and the possibility of calibration drift in the sensor. Almost all of the thermometers in use outside of standards laboratories are secondary, meaning they need to be calibrated by referencing to some primary thermometer.

Many different types of thermometers are known.

*Johnson noise thermometry (JNT)*

The first technique for primary electronic thermometry relies on a measurement of the Johnson-Nyquist noise, or thermal equilibrium noise, of a resistor and has been used for decades, although it is of limited practical use. In 1928, Nyquist derived and Johnson measured the formula $S_I=4kT/R$, where $S_I$ is the current spectral density, $k$ is the Boltzmann constant and $R$ is the resistance, for the current spectral density (in $A^2/Hz$) of the noise. Because resistance is an easy quantity to measure accurately, the challenge of Johnson noise thermometry is to obtain an accurate measurement of the noise power generated by the resistor. This is extremely difficult: the signals involved are very small, particularly at low temperatures, and high-gain amplifiers must be used. The gain and bandwidth of the entire measurement chain must therefore be known to the desired accuracy of the ultimate temperature determination. Because of the complexity and long integration times involved, typically only temperature metrologists and those concerned with the study of noise have used Johnson noise to measure temperature.

Reference is made to D. R. White et al., Metrologia, volume 33, page 325 (1996).

*Shot noise thermometry (SNT)*

Shot noise thermometry is based in the electrical noise from a tunnel junction. In this thermometer, temperature is related to the voltage across the junction by a relative noise measurement with only the use of the electron charge, Boltzmann's constant, and assumption that electrons in a metal obey Fermi-Dirac statistics.

In this type of thermometer, a measurement of the noise power of the junction as a function of bias voltage yields a reading of the temperature from the voltage scaling of the transition between Johnson-Nyquist dominated noise to shot noise.

One of advantages of this type of thermometer is that the reading is independent of the gain and noise of the amplifier chain as opposed to JNT. This allows the use of highfrequency amplifiers to obtain a temperature reading fast, in the sub microsecond regime.

Reference is made to L. Spietz et al., Science, volume 300, page 1929 (2003)

*Coulomb Blockade thermometry (CBT)*

Coulomb blockade thermometry makes use of the Coulomb blockade effect in two-terminal single-electron devices with multiple tunnel junctions to perform a measurement of the temperature. Normally, the device is operated in the high temperature regime where the charging energy of the junction $E_c=e^2/2C$, where $C$ is the capacitance of the junction is much less that the thermal energy $kT$. The device presents a dip in the source-drain conductance at low bias voltage which width is proportional to the temperature at which the set of tunnel junctions are. By measuring this width, one can obtain a reading of the actual temperature.

This type of electronic thermometer was first presented in 1994 (reference is made to J. P. Pekola et al., Phys. Rev. Lett., volume 73, page 2903 (1994)) and it is now a commercial product.

The advantages of this type of thermometer are that it is a compact electronic device, can be measure temperature from a few of miliKelvin up to several Kelvin and it is insensitive to external magnetic fields. However, it requires several high-resistance, ultra-small junctions which make the measurement of the conductance curve slow. Equally, the devices are complex to make as they require the nanofabrication of multiple tunnel junctions with similar characteristics.

Finally, electron-phonon decoupling in this type of multijunction devices can be substantial making reading the lowest temperatures (mK range) complicated.

Fessler, G.: "Electron Temperature in GaAs Quantum Dots", (2008) reports the measurement of electron temperature in a lateral GaAs quantum dot, which was cooled using a dilution refrigerator. The aim was to reduce the electron temperature in the two dimensional electron gas (2DEG) of the GaAs quantum dot using Coulomb blockade peak width in a temperature broadened regime as a thermometer. We find that a two stage low pass filter mounted at the cold finger of the cryostat is able to reduce temperature considerably.

## Summary

According to a first aspect of the present invention there is provided a method of measuring temperature using a single-electron device. The single-electron device, which may be a single-electron box or a single-electron transistor, comprises a quantum dot, a charge reservoir coupled to the quantum dot via a tunnel barrier and a gate electrode capacitively coupled to the quantum dot, the single-electron device capable of exhibiting Coloumb blockade. The method comprises varying a gate voltage applied to the gate around a given gate voltage at which electrochemical level of the quantum dot and electrochemical level of the reservoir are equal and measuring corresponding values of a voltage-dependent term of differential capacitance of the quantum dot and the reservoir as seem from the gate (or "gate differential capacitance of the quantum dot-reservoir system") or measuring a phase shift of a reflected signal obtained using reflectometry, measuring a full width half maximum value of the voltage-dependent term of differential capacitance or the phase shift as a function of gate voltage, and converting the full width half maximum value into a temperature.

Thus, a simple single-electron device, such as a single-electron box or single-electron transistor, can be used as a primary electronic thermometer, *i.e.* without the need to calibrate the device against a reference device and/or the need to check and compensate for drift. The device can measure temperatures ranging from milli-Kelvin to several tens of Kelvin.

The single-electron device may be a single-electron box and the method may further comprise determining a gate coupling factor $\alpha$ for converting the full width half maximum value into a temperature. Determining the gate coupling factor $\alpha$ may comprise varying an applied magnetic field and measuring corresponding position of peak in the capacitance as a function of gate voltage so as determine a gate voltage shift.

Converting the full width half maximum FWHM into the temperature preferably comprises determining:

$$T = \text{FWHM} / (3.53\,\text{k})$$

where T is temperature in Kelvin and k is the Boltzmann constant.

Measuring corresponding values of a capacitance of the quantum dot or a capacitance-dependent property of the quantum dot comprises using a reflectometry.

The single-electron device may comprise a single-electron transistor.

The quantum dot may be formed in silicon. In other words, the thermometer may be implemented in a silicon device, e.g. a silicon transistor.

According to a second aspect of the present invention there is provided apparatus comprising a single-electron device and a measurement system coupled to the single-electron device for performing the method. The system may be configured to perform the method.

The measurement system may comprise a resonator, such as an LC resonator, coupled to the single-electron device and an RF system, such as a vector network analyser, arranged to supply an RF signal to the resonator and to measure a reflected signal from the resonator. The measurement system may comprise a capacitance bridge.

The apparatus may further comprise a computer system configured to perform the method.

The apparatus may further comprise a refrigerator or cryostat, wherein the single-electron device is disposed in the refrigerator or cryostat. The single-electron device may be at a temperature below 4.2 Kelvin.

According to a third aspect of the present invention there is provided a computer program, which when executed by a computer, causes the computer to perform the method.

According to a fourth aspect of the present invention there is provided computer program product comprising a computer-readable medium, which may be non-transitory, storing thereon a computer program.

According to a fifth aspect of the present invention there is provided a thermometer configured to use cyclostationary single-electron transitions in a quantum dot tunnel coupled to an electron reservoir whose electrons are govern by Fermi-Dirac statistics. Such cylcostationary transitions have an associated voltage-dependent capacitance whose magnitude and shape as a function of voltage are directly linked to temperature. This provides a way to directly relate voltage to temperature. The capacitance can be accurately measured, for example, using reflectometry which can provide a fast way to obtain readings of capacitance and hence temperature.

The thermometer can be implemented using a silicon transistor.

**Brief Description of the Drawings**

Certain embodiments of the present invention will now be described, by way of example, with reference to the accompanying drawings, in which:

Figure 1 is a schematic diagram of a quantum dot reservoir and an equivalent circuit at finite frequencies;

Figure 2a is a schematic energy diagram of a discrete quantum dot level aligned with a temperature-broadened Fermi level of a lead;

Figure 2b is a schematic energy band diagram for the system shown in Figure 2a;

Figure 2c is a schematic plot of probability of the electron being in the dot in the system shown in Figure 2a;

Figure 2d is a schematic plot of differential capacitance, $C_P$, as a function of detuning for the system shown in Figure 2a;

Figure 3 is a schematic representation of a capacitance measurement using reflectometry, wherein a device $C_P$ is embedded in an electrical resonator formed by a capacitance Cr and an inductance $L_r$ and wherein the resonator is coupled to a line by a capacitor $C_c$;

Figures 4a and 4b show gate sensor magnitude response and phase response for the device shown in Figure 26b;

Figure 5 show phase shift as a function of gate voltage of a quantum dot reservoir system at 40 mK, 400 mK and 1 K;

Figure 6a is a scanning electron micrograph a silicon nanowire transistor used to implement a gate-based primary electronic thermometer;

Figure 6b is a schematic cross-sectional diagram of the gate-based primary electronic thermometer shown in Figure 6a taken along the direction of the gate;

Figure 6c is a schematic cross-sectional view of the gate-based primary electronic thermometer shown in Figure 6a taken along a nanowire;

Figure 7a is a schematic diagram of a reflectometry measurement system;

Figure 7b is a schematic cross-diagram of a device showing a quantum dot exchanging electrons with a source reservoir

Figure 7c shows measured phase response, at 500 mK, of a resonator across a transition between a quantum dot and a reservoir, indicating a single electron tunnelling event;

Figure 8a is an intensity plot of measured source-drain current as a function of source voltage and gate voltage;

Figure 8b is an intensity plot of measured phase difference as a function of source voltage and gate voltage; and

Figure 8c is a plot of full width half maximum as a function of temperature.

**Detailed Description of Certain Embodiments**

Physical mechanism

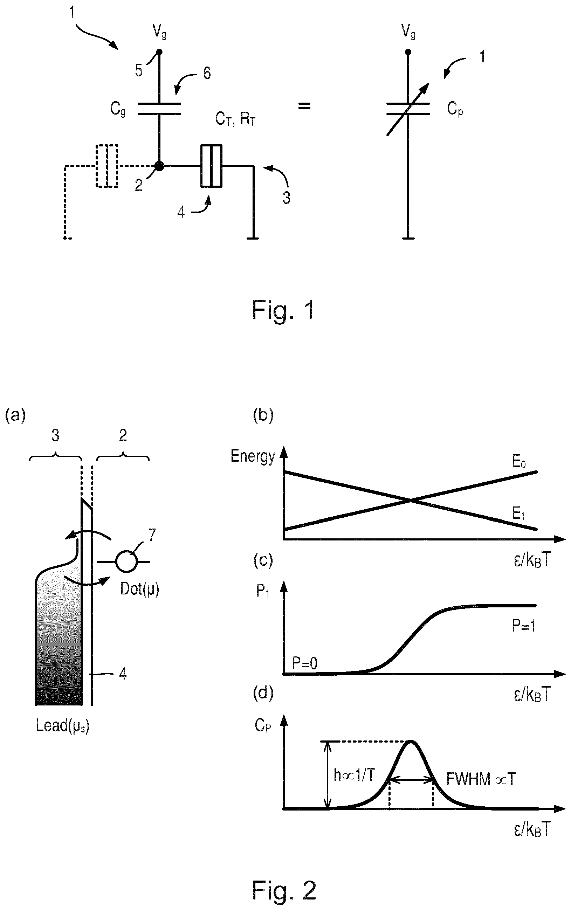

Referring to Figure 1, a coupled quantum dot-reservoir system is shown. Herein the system 1 is also referred to as a "device" or "thermometer".

The system 1 comprises a quantum dot 2 which is tunnel-coupled to an electron reservoir 3 via a tunnel barrier 4 having capacitance $C_T$ and resistance $R_T$ and capacitively-coupled to a gate electrode 5 via a gate capacitance 6 having a value $C_g$. The electron reservoir 3 is connected to ground.

The system 1 is operable in the Coulomb blockade regime wherein single electrons can be isolated in the quantum dot 2. This sets the temperature of operation of the device 1 to be below the charging energy of the device, namely $e^2/C_\Sigma > kT$, where $C_\Sigma = C_T + C_g$ is the total capacitance of the dot 2, e is the charge of the electron, k the Boltzmann constant ($1.3806 \times 10^{-23}$ m²kgs⁻²K⁻¹) and T the temperature of the electrons (in Kelvin), and the resistance $R_T$ of the tunnel barrier 4 to be larger than the quantum resistance $R_Q = 25.6$ k$\Omega$.

The coupled quantum dot-reservoir system 1 has an associated differential capacitance, $C_d$, as seen from the gate 6 that can be obtained from the definition:

$$C_p = \partial Q/(\partial V_g) \qquad (1)$$

where Q is the net charge in the quantum dot 2. By expressing the net charge in terms of the gate voltage, one arrives to the general expression of the differential capacitance of a quantum dot that contains a capacitance term $C_p$ parametric on the gate voltage:

$$C_p(V_g)= -\alpha.e\ (\partial P_1/\partial V_g\ ) == -\alpha.e\ (\partial P_1/\partial t).(\partial t/\partial V_g) \qquad (2)$$

Here $\alpha =C_g/C_\Sigma$ is a gate coupling factor, $P_1$ corresponds to the average probability of having one excess electron 7 (Figure 2a) in the dot 2 and t refers to time. According to Equation 2, if a time-varying voltage $V_g(t)$ is applied to the gate 5, then the device 1 produces a time-varying average probability of having one excess electron in the dot 2 that will lead to a gate-voltage-dependent capacitance $C_p$. Hence, the coupled quantum dot-reservoir system 1, at finite frequencies, is equivalent to a variable capacitor of value $C_p$.

In order to obtain an analytical expression for $C_p$, the internal charge dynamics of the quantum dot-reservoir system 1 are considered. First, two relevant charge states are considered, one corresponding to quantum dot 2 having one excess electron ("level 1") and another having no excess electron ("level 0").

Referring also to Figure 2a, an additional electron 7 can tunnel in and out of the electron reservoir 3 to which the quantum dot 2 is coupled. $\mu_s$ is defined as the electrochemical level in the reservoir 3 (or lead) and $\mu$ is defined as the electrochemical level in the dot 2. An energy detuning $\varepsilon$ is defined as the difference in electrochemical levels between the reservoir 3 and the dot 2, *i.e.* $\varepsilon= \mu - \mu_s$. The energy detuning can be controlled by external means by the gate voltage $V_g$ applied to the gate electrode 5 that is capacitively coupled to the quantum dot 2. The relation between these two magnitudes is given by:

$$E = -e.\alpha\ (V_g - V_g{}^o) \qquad (3)$$

where $V_g{}^o$ corresponds to the gate voltage at which the electron degeneracy occurs.

Referring also to Figure 2b, the energies of the two charge states (E0, E1) as a function of detuning are shown. At zero detuning the two levels are degenerate; at positive detuning the quantum dot 2 is full and at negative detuning the quantum dot 2 is empty. Both levels have a linear dependence of energy with $\varepsilon$ as is the case of single-electron devices close to a degeneracy point.

Next, the system 1 may be considered when subject to a periodic gate voltage drive given by:

$$V_g = V_g{}^{DC} + V_g{}^{AC} \sin(\omega t) \qquad (4)$$

where $V_g{}^{DC}$ corresponds to a gate voltage offset, $V_g{}^{AC}$ to the amplitude of the oscillatory part of the gate voltage. Such an oscillatory voltage applied on the gate 5 with frequency $\omega$ produces a sinusoidal change of the energy detuning producing a cylcostationary process in which an electron 7 tunnels in and out between the quantum dot and the reservoir 2. Here the situation is considered in which the relaxation rate $\Gamma$ of the system 1 is much faster than the frequency $\omega$ of the drive. In this scenario, the system 1 is always in the ground state, meaning that electron tunnelling occurs elastically. In other words, the system 1 always follows the adiabatic path. Under these conditions, an electron tunnelling event occurs once every half period and Equation (2) can be simplified as:

$$C_p\ (V_g) = (\alpha.e)^2\ (\partial P_1/\partial \varepsilon) \qquad (5)$$

Given the energy spectrum of the quantum dot-reservoir system 1 near a degeneracy point, it is now possible to calculate the probability $P_1$ of having an extra electron 7 in the dot 2. Such a probability can be easily calculated in the adiabatic limit, by using Boltzmann statistic.

Referring to Figure 2c, the probability $P_1$ of having an extra electron 7 in the dot 2 as a function of energy detuning $\varepsilon$ is shown. At large negative detuning $\varepsilon$ the probability of having an excess electron 7 is zero, at large positive detuning $\varepsilon$ the probability is one and there is a transition region close to zero detuning. Once $P_1$ is known calculate $C_p$ can be calculated which is given by the following expression:

$$C_p= ((\alpha.e)^2/2kT)\ \cosh^{-2}(\varepsilon/2kT) \qquad (6)$$

Referring still to Figure 2d, capacitance $C_P$ as a function of detuning $\varepsilon$. This capacitance can be understood as being associated with cylcostationary elastic tunnelling of a single electron 7 back and forth between the quantum dot 2 and the reservoir 3. This is a major outcome of the study of the physical mechanism of cyclostationary tunnelling and leads to two major conclusions:

First, the full width at half maximum (FWHM) of the capacitance $C_p$ vs detuning $\varepsilon$ (and hence on $V_g$) depends linearly on temperature T as:

$$\mathrm{FWHM} = \alpha V_{g1/2} = 3.53\,kT \tag{7}$$

where $V_{g1/2}$ is the FWHM of the peak in gate voltage.

Second, the absolute value of the capacitance depends inversely proportional with the temperature:

$$C_p \,\alpha\, 1/T \tag{8}$$

Hence, by measuring the FWHM of the capacitance curve one can obtain a direct reading of the temperature of the electron reservoir 3. The device 1 itself can be placed on or coupled to a system for which a temperature reading is required or can be even added to a chip (not shown) containing other devices so that their temperature can be accurately monitored.

Temperature measurement protocol

To extract temperature from the FWHM of a capacitance curve, a sensitive method of measuring capacitance is required. The maximum value of $C_p$ depends on temperature ranging from 93 fF at 10 mK to 93 aF (*i.e.* 0.093 fF) at 10 K. Such small capacitance values can be measured, for example, by embedding the quantum dot-reservoir system 1 in a resonant circuit. Resonant techniques make use of the oscillatory nature of a system to detect the variation of one of the parameters within the circuit.

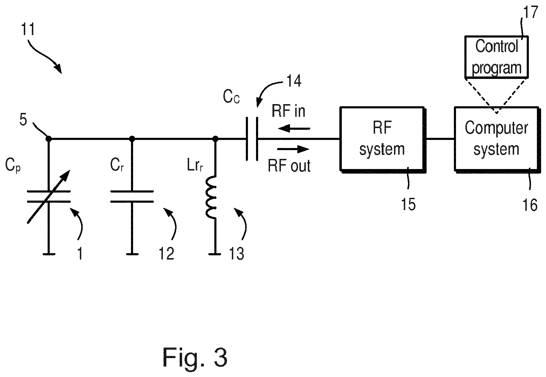

Referring to Figure 3, one resonant measurement techniques involves embedding the quantum dot-reservoir system 1 in an electrical circuit formed by an inductor 12 ($L_r$) and a capacitor 13 ($C_r$), although other measurement arrangements, such as capacitance bridges can be used.

The quantum dot-reservoir system 1 plays the role of an additional variable capacitor. The device 1 is connected to the resonator 11 via the gate 5, hence "a gate-based primary electronic thermometer".

Although a lumped-element resonator 11 is shown, any resonator, such as distributed electrical resonators and mechanical resonators, can be used.

An electrical resonator of this from has a natural frequency $\omega$ of oscillation given by:

$$\omega = 1/\sqrt{(L_r.C_{total})} \tag{9}$$

where $C_{total} = C_r + C_p$. When the quantum dot-reservoir system 1 is biased at a voltage point in which $C_p \neq 0$, the total capacitance of the system changes, thereby changing the natural frequency of oscillation of the resonator. By monitoring how much the resonant frequency has shifted one can infer the value of $C_p$. This can be achieved by using an RF system 15, for example in the form of a vector network analyser 15. The vector network analyser 15 sends a variable frequency (RF in) and detects the reflected signal from the resonator (RF out). By performing homodyne detection at each frequency, the vector network analyser 15 provides a measurement of the reflected power and phase shift of the reflected signal. If there is dissipation in the system, the reflected power has a minimum at the resonant frequency. Moreover, around the resonance the phase presents a 180°-phase shift.

The RF system 15 may be controlled with a computer system 16. The computer system 16 runs control software 17. The computer system 16 may perform temperature measurements automatically.

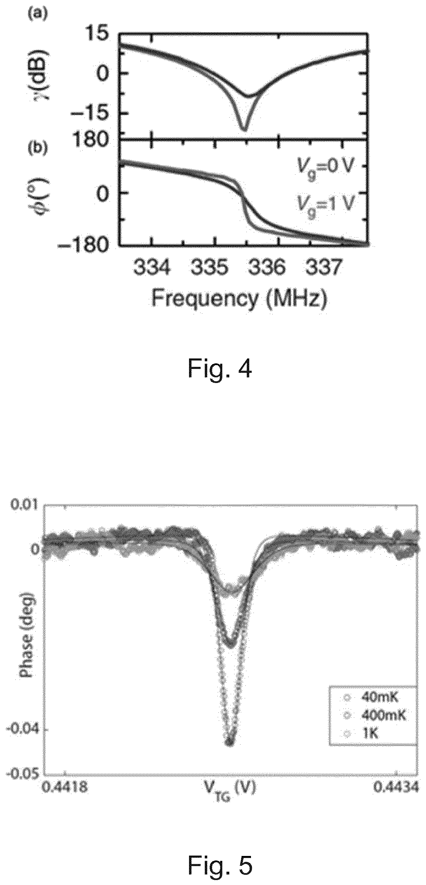

Figures 4a and 4b illustrate an example of a typical measurement, where the reflected power $\gamma$ and phase $\Phi$ are plotted as function of frequency.

The precision and speed of the technique can be further improved by monitoring the phase response of the resonator at the resonant frequency. This can be achieved using homodyne detection at a single frequency instead of looking at the whole frequency spectrum. This technique, known as reflectometry, provides a sensitive and accurate method to measure capacitance. Reference is made to Gonzalez-Zalba et al., Nature Communications, volume 6, page 6084 (2015) which is incorporated herein by reference

In the case of an LC resonator, the phase shift $\Delta\Phi$ at the resonant frequency depends linearly on $C_p$ as:

$$\Delta\phi \approx -\pi Q\, C_p/C_{total} \tag{10}$$

Here Q refers to the quality factor of the resonator 11. Hence, by looking at the phase shift of the reflected signal one can directly infer the capacitance value of the quantum-reservoir system. This measurement is then performed for a range of detunings - and hence gate voltages - around the degeneracy point.

Referring to Figure 5, an example of this type of measurement is shown where phase shift is plotted as a function of gate voltage $V_{TG}$. Around $V_{TG}$ = 0.4426 V, the phase response of the resonator decreases as predicted by Equations 6 and 10. The width and height of the dip depend explicitly on the temperature of the system. The data can be fitted with the expression (6) and from there one can obtain $V_{g1/2}$. Then, using expression (7), the temperature of the system can be inferred.

Technical considerations of the GET

*Temperature range of the gate-based thermometer*

The temperature range of the gate-based sensor is limited both at the low temperature and high temperatures by two different physical mechanisms.

There is a low-temperature limit, namely $h\Gamma > kT$, where $\Gamma$ is the charge relaxation rate of the system 1. In this case, equation (6) does not hold anymore. The shape of the capacitance curve $C_p$ does not depend on temperature but now is directly related to $\Gamma$. In this case, $C_p$ is "lifetime broadened". For example, for a thermometer that works down to 10 mK, the relaxation rate should be lower than $\sim$ 100 MHz

The relaxation rate $\Gamma$ is directly linked to the tunnel rate probability between the quantum dot 2 and the reservoir 3. This magnitude can be tuned at fabrication by selecting the physical separation between the quantum dot 2 and the reservoir 3. Alternatively, it can be tuned electrically *in-situ* by adding an additional gate-electrode than will control the tunnelling probability between the quantum dot 2 and the reservoir 3.

The is a high-temperature limit, namely $e_2/C_\Sigma < kT$. The system will be limited by the ability of the quantum dot 2 to retain a single electron 7, in other words, by the ability of the quantum dot 2 to remain in the Coulomb Blockade regime. For example, a silicon-based thermometer that could work up to room temperature would require a device with physical dimension of $\sim$ 5 nm.

*Characteristics of the resonator to be used for the measurement*

-Frequency of operation-

As mentioned earlier, for equation (6) to hold, the frequency of operation of the resonator $\omega$ must be much lower than the relaxation rate of the system $\Gamma$. This sets a higher bound for the operation frequency. If the thermometer is to be used for measurements down to 10 mK, then the resonator should be operated at a frequency f = $\omega/2\pi$ < 20 MHz <<$\Gamma$.

-Q factor of the resonator-

The Q factor and frequency of operation of the resonator will ultimately determine the bandwidth of the measurement B=f/Q. If the thermometer is to be used to perform a temperature measurement in 1 $\mu$s at 10 mK, then Q of the resonator needs to be < 20. However, measurement accuracy can be traded by speed of measurement. Since, the signal-to-noise ratio (SNR) of the measurement is proportional to $Q^{3/2}$ and the B is inversely proportional to Q, one could decide to have a higher Q resonator to obtain better measurement accuracy with the trade-off of reduced measurement bandwidth.

*Measurement of the gate coupling $\alpha$*

-Option 1-

In order to get an accurate reading of the temperature from $V_{g1/2}$, the gate coupling $\alpha$ needs to be obtained. Since $\alpha = C_g/C_\Sigma$, this can be engineered at fabrication. However, variabilities from nominally identical devices might lead to slightly different values of $\alpha$ and hence an error on the temperature reading. In the gate-based thermometer, the $\alpha$ factor can be measured *in-situ* by applying an external magnetic field. If the quantum dot 2 is in the last-electron regime, the position of the maximum of the capacitance $C_p$ in gate voltage will shift with field following the expression:

$$\alpha V_g = -1/2 \; g.\mu_B.B \qquad\qquad (11)$$

where g is the g factor of the electron spin ~2, $\mu_B$ is the Bohr magneton and B is the external magnetic field. Hence from a measurement of the shift in gate voltage at field B, one can obtain $\alpha$.

-Option 2-

A modification of the device shown in Figure 1a can be considered. In a modified device, the quantum dot 2 is tunnel-coupled to two electron reservoirs (as opposed to just one. The second tunnel barrier has resistance $R_T{}^*$ and capacitance $C_T{}^*$. The second tunnel barrier can be biased at voltage $V_s$. In this particular configuration, the coupling of the second electron reservoir to the quantum dot is $\alpha_s = 1$. This feature of the quantum dot - two-reservoir system removes the need for calibration of the thermometer since now FWHM of the $C_p$ curve as a function of $V_s$ is independent of $\alpha$.

In particular, expression (7) can be simplified to:

$$FWHM = V_{s1/2} = 3.53kT \qquad\qquad (12)$$

Hence, a measurement of $V_{s1/2}$ yields a direct reading of the temperature.

As in the case of the quantum dot-reservoir system, the gate voltage offset at which the electron transition occurs $V_g{}^o$ needs to be found.

Implementation of a gate-based thermometer using a silicon transistor

*Device description*

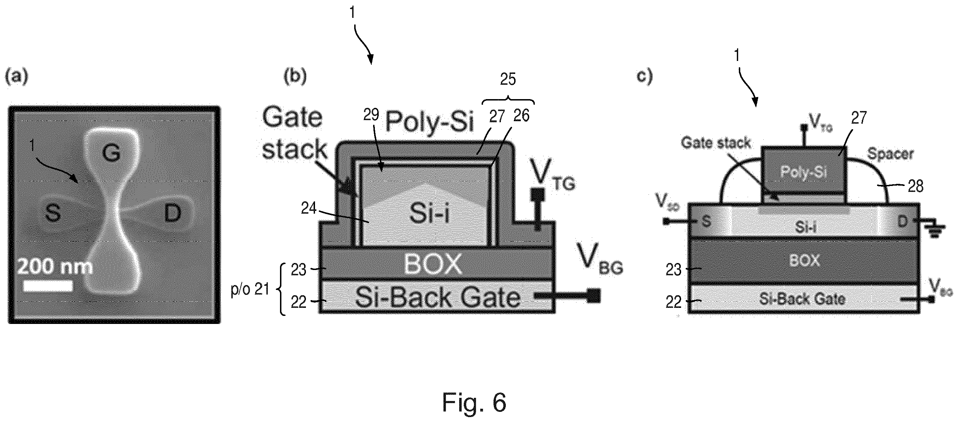

Referring to Figures 6a to 6c, a gate-based thermometer 1 which is implemented in a silicon transistor is shown.

The thermometer 1 is fabricated on a silicon-on-insulator substrate 21 consisting a silicon handle wafer 22 having a thickness of 850 $\mu$m and which can be used as a global back gate, a buried oxide layer 23 having a thickness of 145nm and an intrinsic silicon layer (not shown) having a thickness of 11 nm. The silicon layer (not shown) is patterned using deep-UV lithography and etching to form a nanowire 24. The nanowire 24 has a length of 200 nm and a width of 60 nm. A 40 nm-wide wrap-around top gate 25 is defined using a $SiO_2$ (0.8 nm) / HfSiON (1.9nm) stack for the gate dielectric 26 followed by TiN (5 nm)/ poly-Si (50 nm) as the top gate 27. The self-aligned source and drain S, D are formed by ion implantation after the deposition of 20 nm long $Si_3N_4$ spacers 28 which prevent dopant diffusion into the channel 24.

When a positive gate voltage ($V_{TG}$~0.5V) is applied to the transistor 1, electron accumulation occurs first, i.e. preferentially, at the top 29 of the silicon channel creating electron confinement in two dimensions. Confinement in a third dimension (required to form a quantum dot 2) occurs due to the spacers 28 disposed on opposite sides of the top gate 25. The silicon nanowire 24 directly underneath the spacers 28 remains ungated creating regions of high resistance, *i.e.* tunnel barriers 4. In this structure, electrons can tunnel from the source and drain reservoirs S, D into the quantum dot 2 and *vice versa*.

*Measurement set-up*

Measurements are performed at a base temperature of a dilution refrigerator, in this case 40 mK.

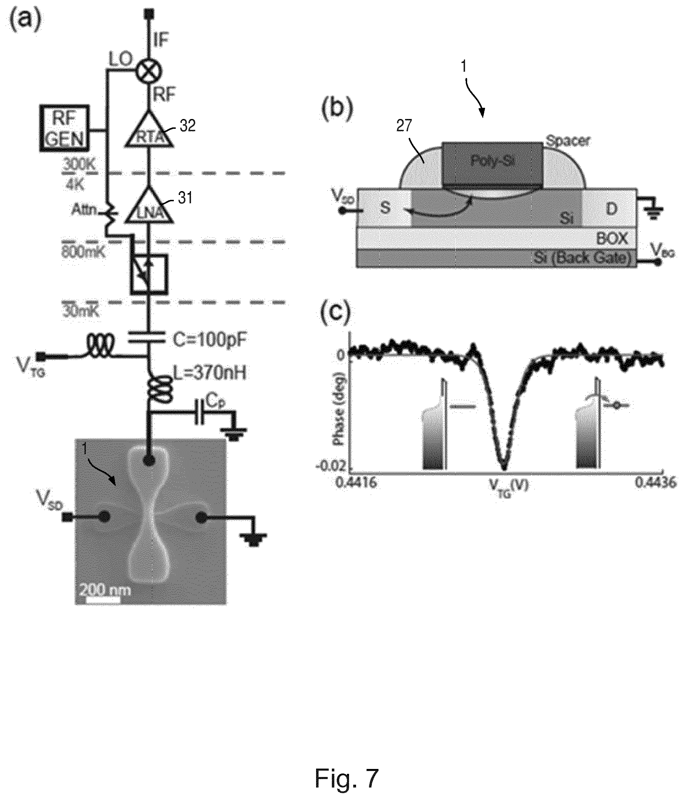

Referring to Figure 7a, high sensitivity capacitance detection is achieved by radiofrequency reflectometry on a tank circuit comprising a surface mounted inductance (in this case, having a value of 370 nH), a parasitic capacitance $C_r$ to ground (in this case, having a value of 660 pF) and a device capacitance C between the transistor top gate and ground. RF-reflectometry is performed close to the resonance frequency (in this case, 313 MHz) and a reflected signal amplified by a low noise cryogenic amplifier 31. The signal is further amplified by another amplifier 32 and demodulated at room temperature. An on-board bias tee is used to apply both DC and sinusoidal RF voltages on the top gate.

Referring also to Figure 7b, the demodulated phase response of the resonator is sensitive to capacitance changes in the system, as per Equation (10), when electrons, driven by the sinusoidal gate-voltage, perform cylcostationary tunnelling. Cylcostationary process is schematically illustrated in Figure 7(b).

Referring to Figure 7c, an example of the phase response of the gate-based thermometer 1 is shown. At low top-gate voltages, the dot is empty; at high gate-voltages the dot is full and at intermediate voltages the electron performs cylcostationary tunnelling modifying the phase response of the resonator.

*Results*

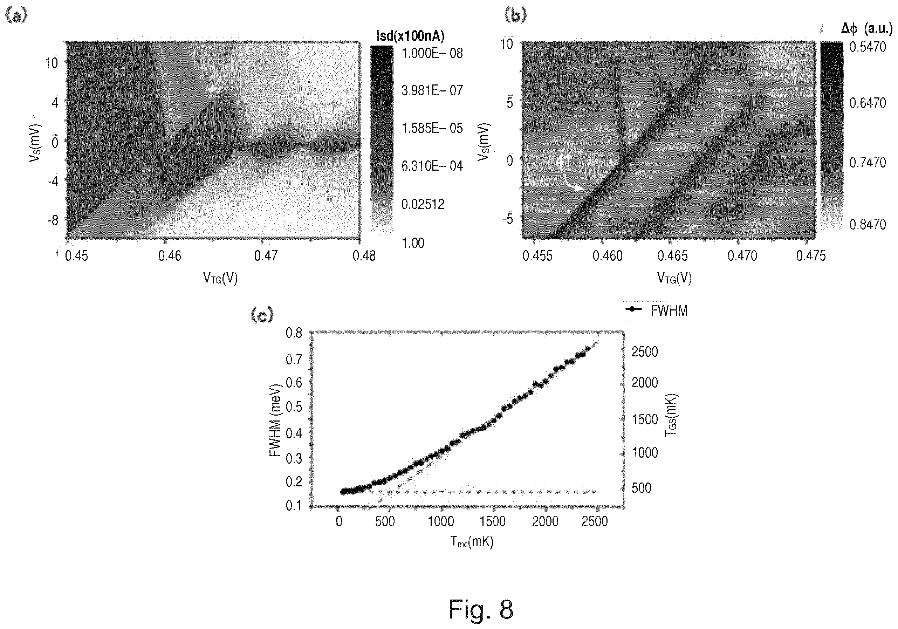

Referring to Figures 8a to 8c, use of the silicon transistor implementation as a primary thermometer is shown.

Referring in particular to Figure 8a, for clarity, the source-drain current of the device as a function of source voltage ($V_s$) and top-gate voltage ($V_{tg}$) is shown, where clear Coulomb diamonds are visible. At low $V_{tg}$ no current flows through the device indicating that the quantum dot 2 is completely depleted of electrons. As $V_{tg}$ is increased towards 0.46 V, a first electron is loaded in the quantum dot 2.

Referring to Figure 8b, phase response of the resonator is shown in the same voltage region as that shown in Figure 8a. In this case, $\Delta\Phi$ shows an enhancement in the regions of electron bistability; this occurs when the electrochemical levels of the dot 2 and reservoirs 3 are aligned. Dashed line 41 indicates the source and gate voltage region where the phase shift traces were recorded. This is done for several temperatures of the dilution refrigerator mixing chamber.

Referring to Figure 8c, calibrated FWHM (in meV) and temperature of the gate-based sensor $T_{GS}$ are plotted as a function of mixing chamber temperature, $T_{mc}$. This temperature is measured using a secondary thermometer, based on a $RuO_2$ resistor that has been previously calibrated by Oxford Instruments. For $T_{mc} > 1$ K, the temperature reading of the gate-based thermometer corresponds well with the reading of a secondary thermometer. The read dashed line corresponds to the theoretical prediction FWHM = 3.53 kT. At low temperatures, $T_{GS}$ deviates from $T_{mc}$ and it tends to saturate to a value of 460 mK. This is due to the fact that at the low temperature limit, the FWHM of this particular device is limited by lifetime broadening as explained hereinbefore.

Thus, the gate-based primary electronic thermometer is a device which can be used to measure low temperatures ranging from a few miliKelvin up to several tens of Kelvin. The thermometer does not require calibration against a second thermometer eliminating a costly step and avoiding calibration drifts over time. The thermometer is insensitive to external magnetic fields and hence can be used to measure in low temperatures environments in which magnetic fields could be present.

The gate-based primary electronic thermometer can exhibit one or more advantages:
Conceptually, the gate-based primary electronic thermometer is a simpler than Coulomb Blockade thermometers (CBT) as only one tunnel junction is needed as opposed to many in the case of Coulomb Blockade thermometers, which use more than 900 junctions in some cases.

By embedding the gate-based primary electronic thermometer in an electrical resonator, the temperature reading can be acquired quickly in a sub-microsecond range as opposed to the tens of milliseconds for the Coulomb Blockade thermometers.

The gate-based primary electronic thermometer can be fabricated using silicon nanowire which is compatible with CMOS fabrication. Thus the device can be fabricated easily and cheaply.

Modifications

It will be appreciated that various modifications may be made to the embodiments hereinbefore described. Such modifications may involve equivalent and other features which are already known in the design, manufacture and use of Coulomb Blockade devices and component parts thereof and which may be used instead of or in addition to features already described herein. Features of one embodiment may be replaced or supplemented by features of another embodiment.

Other forms of measurement system can be used, i.e. reflectometry need not be used. An LCR resonator configuration can be used, such as an inductor $L_r$ in series with a parallel arrangement of capacitors $C_p$ and $C_r$.

Other forms of single-electron device can be used. For example, the device need not be formed from silicon, but can be formed from, for example, other semiconductor materials (such as GaAs) or metals (such as Al). Other designs of transistor may be used. Other materials can be used. For example, other dielectric materials can be used. Layers can have other thicknesses. Devices can have other dimensions, e.g. other lengths and widths.

**Claims**

1. A method of measuring temperature using a single-electron device comprising a quantum dot (2), a charge reservoir (3) coupled to the quantum dot via a tunnel barrier (4) and a gate (5) capacitively coupled to the quantum dot, the single-electron device capable of exhibiting Coloumb blockade, the method comprising:

   varying a gate voltage applied to the gate around a given gate voltage at which electrochemical level of the quantum dot and electrochemical level of the reservoir are equal and measuring corresponding values of a voltage-dependent term of differential capacitance of the quantum dot and the reservoir as seen from the gate or measuring a phase shift of a reflected signal obtained using reflectometry;
measuring a full width half maximum FWHM of the voltage-dependent term of the differential capacitance or the phase shift as a function of gate voltage;
and
converting the full width half maximum value into a temperature.

2. The method of claim 1, wherein the single-electron device is a single-electron box and the method further comprises:
determining a gate coupling factor $\alpha$ for converting the full width half maximum value into a temperature.

3. The method of claim 2, wherein determining the gate coupling factor $\alpha$ comprises:
varying an applied magnetic field and measuring corresponding position of peak in the capacitance as a function of gate voltage so as determine a gate voltage shift.

4. The method of any one of claims 1 to 3, wherein converting the full width half maximum FWHM into the temperature comprises determining:

$$T = \text{FWHM} / (3.53\,k)$$

where T is temperature in Kelvin and k is the Boltzmann constant.

5. The method of any one of claims 1 to 4, wherein measuring corresponding values of a capacitance of the quantum dot or a capacitance-dependent property of the quantum dot comprises using a reflectometry.

6. The method of any one of claims 1 to 5, wherein the single-electron device comprises a single-electron transistor.

7. The method of any one of claims 1 to 6, wherein the quantum dot is formed in silicon.

8. Apparatus comprising:

a single-electron device (1); and
a measurement system (11, 15) coupled to the single-electron device,

the system for performing the method of any one of claims 1 to 7.

9. The apparatus of claim 8, wherein the measurement system comprises:

a resonator (11) coupled to the single-electron device; and
a RF system (15) arranged to supply an RF signal to the resonator and to measure a reflected signal from the resonator.

10. The apparatus according to claim 8 or 9, comprising:
a computer system (16) configured to perform the of any one of claims 1 to 7.

11. A computer program, which when executed by a computer, causes the computer to perform the method of any one of claims 1 to 7.

12. A computer program product comprising a computer-readable medium storing thereon a computer program according to claim 11.

**Patentansprüche**

1. Verfahren zur Temperaturmessung mithilfe einer Einzelelektronenvorrichtung, umfassend einen Quantenpunkt (2), ein Ladungsreservoir (3), das über eine Tunnelbarriere (4) und ein Gate (5) kapazitiv mit dem Quantenpunkt gekoppelt ist, wobei die Einzelelektronenvorrichtung in der Lage ist, Coloumb-Blockade aufzuweisen, wobei das Verfahren umfasst:

ein Variieren einer an das Gate angelegten Gatespannung um eine gegebene Gatespannung, bei der ein elektrochemisches Niveau des Quantenpunkts und ein elektrochemisches Niveau des Reservoirs gleich sind, und ein Messen entsprechender Werte eines spannungsabhängigen Ausdrucks von Differentialkapazität des Quantenpunkts und des Reservoirs, gesehen vom Gate, oder ein Messen einer Phasenverschiebung eines mittels Reflektometrie erhaltenen reflektierten Signals;
ein Messen einer vollen Breite/halbes Maximum (VBHM) des spannungsabhängigen Ausdrucks von Differentialkapazität oder der Phasenverteilung als eine Funktion der Gatespannung; und
ein Konvertieren des volle Breite/halbes Maximum-Werts in eine Temperatur.

2. Verfahren nach Anspruch 1, wobei die Einzelelektronenvorrichtung eine Einzelelektronenbox ist und das Verfahren ferner umfasst:
ein Bestimmen eines Gatekopplungsfaktors $\alpha$ zum Konvertieren des volle Breite/halbes Maximum-Werts in eine Temperatur.

3. Verfahren nach Anspruch 2, wobei das Bestimmen des Gatekopplungsfaktors $\alpha$ umfasst:
ein Variieren eines angelegten Magnetfelds und ein Messen einer entsprechenden Position einer Spitze in der Kapazität als eine Funktion der Gatespannung, um eine Gastespannungsverschiebung zu bestimmen.

4. Verfahren nach einem der Ansprüche 1 bis 3, wobei das Konvertieren des volle Breite/halbes Maximum (VBHM) in die Temperatur ein Bestimmen von:

$$T = VBHM/(3{,}53\ k)$$

umfasst, wobei T Temperatur in Kelvin und K die Boltzmann-Konstante ist.

5. Verfahren nach einem der Ansprüche 1 bis 4, wobei das Messen entsprechender Werte einer Kapazität des Quantenpunkts oder einer kapazitätsabhängigen Eigenschaft des Quantenpunkts ein Verwenden von Reflektometrie umfasst.

6. Verfahren nach einem der Ansprüche 1 bis 5, wobei die Einzelelektronenvorrichtung einen Einzelelektronentransistor umfasst.

7. Verfahren nach einem der Ansprüche 1 bis 6, wobei der Quantenpunkt in Silikon geformt wird.

8. Gerät, umfassend:

eine Einzelelektronenvorrichtung (1); und
ein Messsystem (11, 15), das mit der Einzel elektronenvorrichtung gekoppelt ist,
das System zum Ausführen des Verfahrens nach einem der Ansprüche 1 bis 7.

9. Gerät nach Anspruch 8, wobei das Messsystem umfasst:

einen mit der Einzelelektronenvorrichtung gekoppelten Resonator (11); und
ein HF-System (15), das angeordnet ist, um ein HF-Signal an den Resonator zuzuführen und ein reflektiertes Signal vom Resonator zu messen.

10. Gerät nach Anspruch 8 oder 9, umfassend:
ein Computersystem (16), das konfiguriert ist, um einen der Ansprüche 1 bis 7 auszuführen.

11. Computerprogramm, das bei Ausführung durch einen Computer den Computer veranlasst, das Verfahren nach einem der Ansprüche 1 bis 7 auszuführen.

12. Computerprogrammprodukt, umfassend ein computerlesbares Medium, auf dem ein Computerprogramm nach Anspruch 11 gespeichert ist.

**Revendications**

1. Procédé de mesure de la température à l'aide d'un dispositif à électron unique comprenant un point quantique (2), un réservoir de charge (3) couplé au point quantique via une barrière tunnel (4) et une grille (5) couplée capacitivement au point quantique, le dispositif à électron unique étant capable de présenter un blocage de Couloumb, le procédé comprenant :

   la variation d'une tension de grille appliquée à la grille autour d'une tension de grille donnée à laquelle le niveau électrochimique du point quantique et le niveau électrochimique du réservoir sont égaux et la mesure de valeurs correspondantes d'un terme dépendant de la tension de la capacité différentielle du point quantique et du réservoir comme vu depuis la grille ou la mesure d'un déphasage d'un signal réfléchi obtenu par réflectométrie ;
   la mesure d'une largeur à mi-hauteur FWHM du terme dépendant de la tension de la capacité différentielle ou du déphasage en fonction de la tension de grille ; et
   la conversion de la valeur de largeur à mi-hauteur en une température.

2. Procédé selon la revendication 1, dans lequel le dispositif à électron unique est une boîte à électron unique et le procédé comprend en outre :
   la détermination d'un facteur de couplage de grille $\alpha$ pour convertir la valeur de largeur à mi-hauteur en une température.

3. Procédé selon la revendication 2, dans lequel la détermination du facteur de couplage de grille $\alpha$ comprend :
   la variation d'un champ magnétique appliqué et la mesure d'une position correspondante de pic dans la capacité en fonction de la tension de grille afin de déterminer un décalage de tension de grille.

4. Procédé selon l'une quelconque des revendications 1 à 3, dans lequel la conversion de la largeur à mi-hauteur FWHM en température comprend la détermination de :

$$T = FWHM / (3{,}53\ k)$$

   où T est la température en Kelvin et k est la constante de Boltzmann.

5. Procédé selon l'une quelconque des revendications 1 à 4, dans lequel la mesure des valeurs correspondantes d'une capacité du point quantique ou d'une propriété dépendante de la capacité du point quantique comprend l'utilisation d'une réflectométrie.

6. Procédé selon l'une quelconque des revendications 1 à 5, dans lequel le dispositif à électron unique comprend un transistor à électron unique.

7. Procédé selon l'une quelconque des revendications 1 à 6, dans lequel le point quantique est formé de silicium.

8. Appareil comprenant :

   un dispositif à électron unique (1) ; et
   un système de mesure (11, 15) couplé au dispositif à électron unique, le système permettant de réaliser le procédé de l'une quelconque des revendications 1 à 7.

9. Appareil selon la revendication 8, dans lequel le système de mesure comprend : un résonateur (11) couplé au dispositif à électron unique ; et
   un système RF (15) conçu pour fournir un signal RF au résonateur et pour mesurer un signal réfléchi provenant du résonateur.

10. Appareil selon la revendication 8 ou 9, comprenant :
    un système informatique (16) configuré pour réaliser l'une quelconque des revendications 1 à 7.

11. Programme informatique qui, lorsqu'il est exécuté par un ordinateur, amène l'ordinateur à réaliser le procédé selon l'une quelconque des revendications 1 à 7.

12. Produit de programme informatique comprenant un support lisible par ordinateur stockant sur celui-ci un programme informatique selon la revendication 11.

Fig. 1

Fig. 2

Fig. 3

Fig. 4

Fig. 5

Fig. 6

Fig. 7

(a)

Isd(x100nA)

1.000E−08

3.981E−07

1.585E−05

6.310E−04

0.02512

1.00

(b)

Δφ (a.u.)

0.5470

0.6470

0.7470

0.8470

41

(c)

FWHM

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. R. WHITE et al.** *Metrologia,* 1996, vol. 33, 325
- **L. SPIETZ et al.** *Science,* 2003, vol. 300, 1929
- **J. P. PEKOLA et al.** *Phys. Rev. Lett.,* 1994, vol. 73, 2903
- **FESSLER, G.** *Electron Temperature in GaAs Quantum Dots,* 2008
- **GONZALEZ-ZALBA et al.** *Nature Communications,* 2015, vol. 6, 6084